# EUROPEAN PATENT SPECIFICATION

(11) **EP 4 106 212 B1**
(45) Date of publication and mention of the grant of the patent: **01.05.2024**
(21) Application number: 22177809.5
(22) Date of filing: 08.06.2022
(51) Int. Cl.: H04B 5/00

(54) **A METHOD OF SHORT-RANGE DATA TRANSMISSION BETWEEN A PORTABLE ELECTRONIC DEVICE FOR STORAGE AND SHORT-RANGE DATA TRANSMISSION AND ANOTHER DEVICE OF THIS TYPE OR A STATIONARY DEVICE, AND A PORTABLE ELECTRONIC DEVICE FOR STORAGE AND SHORT-RANGE DATA TRANSMISSION**
VERFAHREN ZUR DATENÜBERTRAGUNG MIT KURZER REICHWEITE ZWISCHEN EINER TRAGBAREN ELEKTRONISCHEN VORRICHTUNG ZUR SPEICHERUNG UND DATENÜBERTRAGUNG MIT KURZER REICHWEITE UND EINER ANDEREN VORRICHTUNG DIESES TYPS ODER EINER STATIONÄREN VORRICHTUNG, UND EINE TRAGBARE ELEKTRONISCHE VORRICHTUNG ZUR SPEICHERUNG UND DATENÜBERTRAGUNG MIT KURZER REICHWEITE
PROCÉDÉ DE TRANSMISSION DE DONNÉES DE COURTE PORTÉE ENTRE UN DISPOSITIF ÉLECTRONIQUE PORTABLE POUR LE STOCKAGE ET LA TRANSMISSION DE DONNÉES DE COURTE PORTÉE ET UN AUTRE DISPOSITIF DE CE TYPE OU UN DISPOSITIF FIXE, ET DISPOSITIF ÉLECTRONIQUE PORTABLE POUR LE STOCKAGE ET LA TRANSMISSION DE DONNÉES DE COURTE PORTÉE

(30) Priority: 11.06.2021 PL 43812721
(43) Date of publication of application: 21.12.2022
(73) Proprietor: Tenvirk Spólka Z Ograniczona Odpowiedzialnoscia, 41-506 Chorzów (PL)
(72) Inventor: LEMPINSKI, Tomasz, 40-887 Katowice (PL)
(74) Representative: Lukaszyk, Szymon

(56) References cited:
- WO-A2-2010/039004
- GB-A- 2 407 189
- US-A1- 2015 121 108
- US-B2- 9 929 876

## Description

The invention relates to a method of short-range data transmission between a portable electronic device for storage and short-range data transmission, comprising a power source, a microcontroller, a memory circuit, and a radio transceiver, and another device of this type or a stationary device. The invention relates also to a portable electronic device for storage and short-range data transmission.

### Background of the invention

Portable devices of this type can communicate with each other as well as with stationary devices. They are used, among others, in access control and person identification systems, contactless payments, for starting devices and confirming the start of work with devices or people, sharing small files, digital business cards, etc. For data transmission, the most commonly used are short-range transmission protocols, such as NFC (near-field communication) based on radio-frequency identification (RFID) technology. Passive RFID cards do not contain a power source, because they are powered by the electromagnetic field of the RFID reader, which is a radio transmitter that generates this electromagnetic field. RFID readers are built into stationary devices powered from the mains or into larger devices, such as smartphones, whose batteries allow the reader to be powered for several days.

In the case of small portable devices, especially of ID card sizes, the issue of their power supply becomes problematic. Microcontrollers and radio transceiver radio transceivers are components that require significant power. Therefore the power sources of such devices are discharged relatively quickly. To extend the device activity time, the microcontroller can operate in a sleep mode with reduced energy consumption and inactive communication and data access functions, where its activity is limited to maintaining the memory state and awaiting for an external wakeup interrupt.

It is known in the art to awake the microcontrollers of various types of portable electronic devices for data storage and exchange, including so-called smart cards, to an active state with higher energy consumption and active communication and data access functions when a predefined threshold of light intensity incident on the photoelectric sensor of the device is exceeded, or alternatively, after determining a specific spatial orientation of the device.

Solutions with a photoelectric sensor are disclosed, for example, in publications US2006283960, KR20100109658, US2016148194, EP2333701, WO2010039004, DE4311385 or US7966263. Solutions based on the detection of a specific spatial orientation of the device are disclosed, for example, in the publications US2008211622, US2017228631, US2017323166, US2005210417 WO2010017552 or US7151455.

Publication EP2333701A1 discloses an RFID passive transponder card comprising a photoelectric sensor, which, upon receipt of a response request from the RFID reader, outputs a response depending on a predefined light intensity threshold measured by the sensor.

Publication US10825017B1 discloses a multifunctional contactless transaction card comprising a power source, a microcontroller, memory, a radio transceiver, an optical pattern, such as a QR code, generation circuit, and an optical pattern sensor. Upon receiving short-range information related to the transaction from the transmitting card, the receiving card generates an optical pattern based on a cryptographic key which is received by the optical pattern sensor of the transmitting card.

Publication US2015121108 A1 discloses a method of near-field communication (NFC) between a portable device and another NFC device for transmitting authentication information. The portable device comprises sensors including motion sensor(s), light sensors, acoustic sensor, and magnetic sensor. The power consumption of the portable device is optimized by receiving a signal from a low-power processor, said signal indicating an environmental change at the sensors.

The object of the invention was to provide an energy-saving solution devoid of the disadvantages of the prior art solutions.

### Summary of the invention

The invention provides a method of short-range data transmission between a portable electronic device for storage and short-range data transmission, as outlined in the outset characterized in that the portable electronic device comprises a photoelectric sensor irradiated by a reference surface of the device, and a spatial orientation sensor defining the reference vector of the device, wherein the method comprises the steps of (a) measuring the intensity of the light incident on the reference surface; (b) awakening the microcontroller if the light intensity measured in step (a) is lower than a predefined threshold and determining the reference vector direction; (c) turning on the radio transceiver if the reference vector is inclined relative to the gradient vector of the gravitational field by an angle within a predefined range of inclination angles, and preferably substantially parallel to the gradient vector of the gravitational field; and (d) starting a data sending session from the memory circuit if the reference vector is pointing within a predefined range of first directions, or starting a data receiving session to the memory circuit if the reference vector is pointing within a predefined range of second directions, wherein said range of second directions is different, and preferably substantially opposite, to said range of first directions.

The term "microcontroller" as used herein means an electronic circuit, in particular an integrated microprocessor circuit, comprising a central processing unit (CPU), input/output circuits and RAM memory, which can operate in a sleep mode in which its activity is limited to maintaining a memory state and waiting for an external wakeup interrupt.

The term "reference surface" as used herein means the surface through which the photoelectric sensor is exposed to light.

The term "reference vector" as used herein means a vector defined by the spatial orientation sensor.

Preferably the microcontroller enters the sleep mode after the end of the data sending or receiving session and in the case when the reference vector is not substantially parallel to the gradient vector of the gravitational field.

Preferably during the data transmission session, the sensitivity and power of the radio transceiver is minimized.

This ensures both a short transmission range and minimal power consumption from the power source. Many radio transceivers allow for a smooth adjustment of these parameters, which allows them to be used also for long-range transmission, if necessary.

Preferably the method of the invention comprises an additional step of (e) an audible and/or light and/or vibrational and/or image signaling of correct or incorrect termination of the data sending and/or receiving session.

Such a signal may in particular be displayed in the form of a message on the card screen.

Preferably step (a) is conducted at predefined time intervals.

Preferably the data sending session is conducted in step (d) for a predefined sending period and the data receiving session is conducted in step (d) for a predefined receiving period or until the data is received, whichever comes first.

This allows data transmission in spite of different initiation times for the data sending and receiving sessions, as long as the sending and receiving time periods sufficiently overlap to receive the data.

Preferably the data sending and receiving sessions are conducted in step (d) until the transmission of the data is complete.

Preferably step (d) comprises a handshake process to determine the parameters of the data transmission session.

Preferably only one or only two portable electronic devices are involved in the data transmission.

The invention provides also a portable electronic device for storage and short-range data transmission, comprising a power source, a microcontroller, a memory circuit, and a radio transceiver, characterized in that it comprises a photoelectric sensor irradiated by a reference surface of the device, and a spatial orientation sensor defining the reference vector of the device, and is configured such that when the light intensity measured by said photoelectric sensor is higher than a predefined threshold value the microcontroller operates in a sleep mode in which the photoelectric sensor is active and the spatial orientation sensor and the radio transceiver are turned off, when the light intensity measured by said photoelectric sensor is lower than the predefined threshold value the microcontroller is awakened and the spatial orientation sensor is turned on, wherein, if the reference vector is inclined relative to the gradient vector of the gravitational field by an angle within a predefined range of inclination angles, and preferably substantially parallel to the gradient vector of the gravitational field, the radio transceiver is turned on, wherein if the reference vector is pointing within a predefined range of first directions, a data sending session from the memory circuit is initiated, and if the reference vector is pointing within a predefined range of second directions, a data receiving session to the memory circuit is initiated, wherein said range of second directions is different, and preferably substantially opposite, to said range of first directions.

Preferably after the termination of the data sending or receiving session and when the reference vector is not substantially parallel to the gradient vector of the gravitational field, the microcontroller enters a sleep mode.

Preferably the portable electronic device is in the form of a card, preferably similar to standard ISO/IEC 7810, wherein said reference surface is parallel to the front surface of the card.

Preferably the device comprises at least one additional component such as a light source, sound source, vibrational alert, screen, keyboard and/or a biometric sensor to identify the authorized user.

Such a component may be used in particular to confirm the correctness or for signaling errors of the data transmission session.

Preferably the radio transceiver and/or the photoelectric sensor and/or the spatial orientation sensor and/or the memory circuit is (are) integrated with the microcontroller.

Preferably said spatial orientation sensor has the form of an accelerometer, preferably a uniaxial accelerometer configured to determine its orientation with respect to a gravitational field which axis defines the reference vector.

Thanks to the use of a power source, the invention eliminates the inconveniences of RFID technology, and at the same time ensures quick and energy-saving determination of the existence of an appropriate distance for effective short-range communication, as well as determination of the sending or receiving mode of the device.

### Detailed description of the invention

The invention is illustrated in the following embodiments and in the drawing, in which:
Fig. 1 shows a schematic view of an embodiment of the data storage and exchange device according to the invention in the form of a card in a top view;
Fig. 2 shows the two cards shown in Fig 1 prior to the initiation of a data transmitting session;
Fig. 3 shows the two cards shown Fig. 1, ready for and during a data transmitting session;
Fig. 4 illustrates an exemplary method of data transmission between two devices according to the invention;
Fig. 5 illustrates an exemplary data transmission session between a sending device (Fig. 5a) and a receiving device (Fig. 5b), and
Fig. 6 illustrates another embodiment of a data transmission session between a sending device (Fig. 6a) and a receiving device (Fig. 6b).

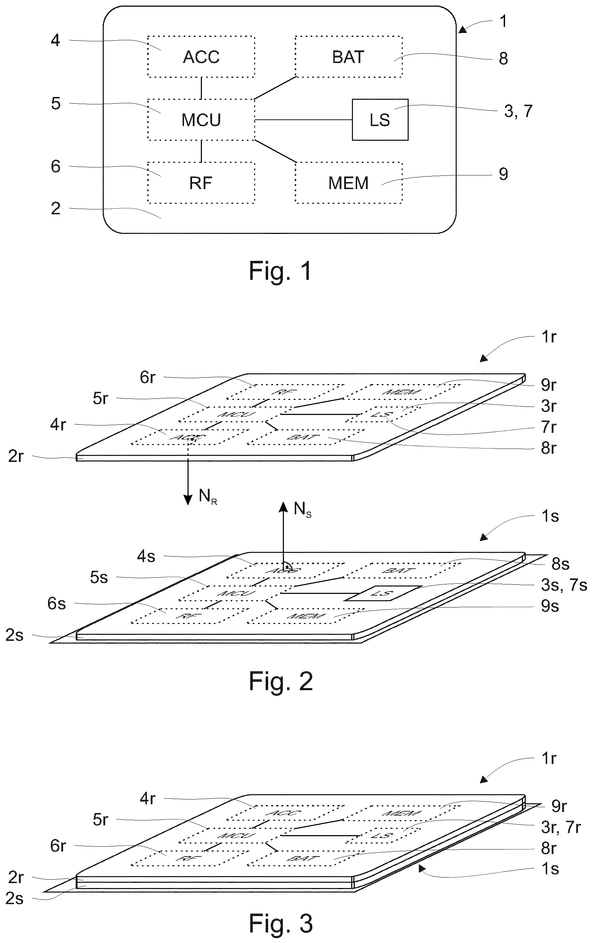

The device 1 for storage and short-range data transmission shown in Fig. 1 is applicable for the transmission of digital information to and from other devices 1 of this type, or to and from suitably configured stationary devices. Device 1 is in the form of a card 2 with dimensions similar to the ISO/IEC 7810 ID-1 standard, consisting of several laminated plastic layers. In the core of the card 2 there are embedded a microcontroller 5 (MCU), a radio transceiver 6 (RF) for radio data transmission in the IEEE 802.15.4 standard, a power source 8 (BAT), a memory circuit 9 (MEM) and a spatial orientation sensor 4 (ACC) in the form of an accelerometer, in particular a uniaxial accelerometer configured to determine its orientation with respect to an entropic gravitational field, which axis defines a reference vector of the device 1. Furthermore, a photoelectric sensor 3 is mounted on the front of the card 2, which defines the reference surface of the device 1. The components are electrically connected to each other, as will be described below. The parameters of the radio transceiver 6 such as frequency, modulation, power and sensitivity are controlled by the microcontroller 5.

Numerical references to functionally the same components remain the same throughout the figures, with additional suffixes "s", "r" added, where appropriate, to distinguish between sending and receiving components.

The microcontroller 5, powered by a battery 8, is connected to the memory circuit 9, storing, inter alia, the device 1 identifier, and controls the operation of other components of the device 1.

The device 1 typically operates in a sleep mode in which the power consumption of the microcontroller 5 is minimized, the accelerometer 4 and the radio transceiver 6 are turned off, and only the photoelectric sensor 3 is active, consuming a minimum amount of power. In the sleep mode, the device 1 may stand by for many months or years.

Fig. 2 shows the two devices 1s and 1r shown in Fig. 1 prior to starting a data exchange session. The sending card 2s is lying on a flat surface with its front facing upwards so that the reference vector N_{S} is directed substantially opposite to the gradient vector of the gravitational field. The receiving card 2r is applied face down by the user such that the reference vector N_{R} substantially follows the gradient vector of the gravitational field.

Fig. 3 shows cards 2s and 2r ready for a data exchange session or during its duration. After placing the upper card 2r on the lower card 2s, the reference surfaces 7s and 7r of the photoelectric sensors 3s and 3r are covered. The photoelectric sensors 3s and 3r then trigger interrupt signals (LS INT) for the microcontrollers 5s and 5r, which are woken up and check the readings of the accelerometers 4s and 4r. Since random lateral accelerations act on the accelerometers4s and 4r, both cards 2s and 2r should preferably remain almost motionless for a predefined period of time (for example a second), so that the microcontroller 5 can read the spatial orientation of the cards 2s and 2r from the accelerometers 4s and 4r.

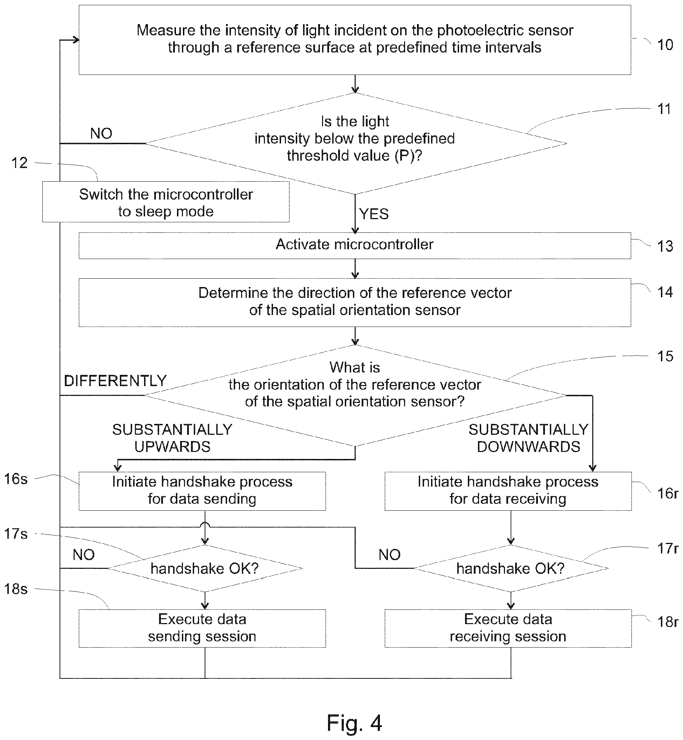

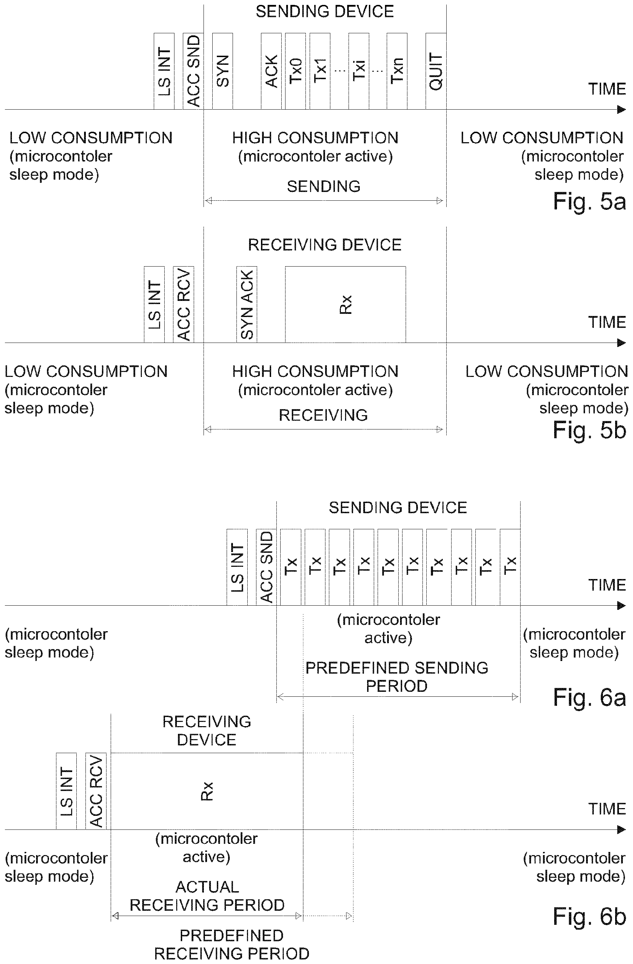

An exemplary method of data transmission between two devices 1 is illustrated in Fig. 4 and Fig. 5.

In the sleep mode of the device 1, the photoelectric sensor 3 measures in step 10 at predefined time intervals (e.g. every second) the intensity of light. In another embodiment, the measurement of the intensity of light may, of course, be continuous.

Therefore, in step 11, the photoelectric sensor 3 checks if the measured light intensity is below a predefined threshold value (e.g. 30 lux). If so, the photoelectric sensor 3 generates an interrupt signal (LS INT) which is an electrical pulse received by the microcontroller 5 on one of its inputs. This signal wakes up the microcontroller 5 (step 13), and executes the program stored in the memory of the microcontroller 5.

In an alternative embodiment of the device 1, the light intensity may be checked by the microcontroller 5 itself by waking up periodically from the sleep mode, and the interrupt signal may be an internal signal of the microcontroller 5 if the light intensity is below the threshold value.

In the next step 14, the accelerometer 4, or the microcontroller using the readings of the accelerometer 4, determines the orientation of the device 1 reference vector N. If in step 15 it is determined that the reference vector N is not oriented substantially upwards or substantially downwards within a predefined range of angles (e.g. ±20⁰), the microcontroller 5 is switched to sleep mode in step 12.

Otherwise, the handshake process is initiated in order to determine the logical parameters of the data transmission session and its purposefulness. For example, it may be determined during a handshake that data transmission between two data devices 1 with specific identifiers is not necessary (e.g. because it has already been performed), or that a data transmission to another remote external device is required.

If the reference vector N_{S} is oriented substantially upward (ACC SND), a handshake process for sending device 1s is initiated in step 16s; and if the reference vector N_{R} is oriented substantially downward (ACC RCV), the handshake process for receiving device 1r is initiated in step 16r.

The handshake process is carried out by the radio transceivers 6s and 6r of the devices of 1s and 1r and can have three-levels: (I) the radio transceiver 6s of the device 1s sends a synchronization signal (SYN) with the device 1s identifier, (II) the radio transceiver 6r of the device 1s receives the synchronization signal (SYN) and, if it is ready to receive data, sends an acknowledgment signal (SYN-ACK), (III) the radio transceiver 6s of the device confirms 1s the reception with the signal (ACK).

If it is determined in steps 17s and 17r that the handshake process has ended correctly, the sending device 1s starts in step 18s a session of sending subsequent data packets (Tx0, Tx1, ..., Txn) via the radio transceiver 6s, and the receiving device 1r starts in step 18r, a data receiving session (Rx) from the sending device 1s via the radio transceiver 6r. The sending device 1s informs the receiving device 1r about the end of data transmission with a quit signal (QUIT), and then the microcontrollers 5 of both devices 5s and 5r are switched to sleep mode in step 12. During the data transmission session, the sensitivity and power of the radio transceivers 6s, 6r is minimal, ensuring a short transmission range, but also the minimum power consumption from the batteries 8s, 8r.

If it is determined in steps 17s and 17r that the handshake process has not ended correctly, the microcontroller 5 is switched to sleep mode in step 12.

A much simpler, particularly energy-efficient implementation of a data transmission session is illustrated in Fig. 6. In this embodiment, after determining that the light intensities are below the predefined threshold value for a predefined period of time, the photoelectric sensors 3s and 3r of the sending device 1s and the receiving device 1r generate interrupt signals (LS INT) for the microcontrollers 5s and 5r of these devices, which are awakened and check the status of the accelerometers4s and 4r. If the reference vector of the sending device 1s is substantially downward and the reference vector of the receiving device 1r is substantially upward (contrary to the situation shown in Fig. 2 and Fig. 3), the accelerometers 4s and 4r generate the signals to start a data session (respectively ACC SND and ACC RCV) for the microcontrollers 5s and 5r.

In this embodiment of the invention, the handshake process between devices 1s and 1r is not performed. The radio transceiver 6s of the sending device 1s simply transmits the same Tx data packet repeatedly for a predefined, relatively short sending period (for example for 1 second), after which the microcontroller 5s is switched into sleep mode. In this example, the Tx packet contains digital data along with the identifier (serial number) of the sending device 1s. The radio transceiver 6r of the receiving device 1r remains in the listening mode for the predefined receiving period, which may be the same as the predefined sending period, or until the Rx data packet is received, whichever comes first, after which the microcontroller 5r is switched into sleep mode. Thanks to that, as shown in Fig. 6b by a dashed line, the actual receiving period can be significantly shorter than the predefined receiving period, which has a positive effect on the energy efficiency of the receiving device 1r. Moreover, the data may be transmitted despite initiating the sending and receiving sessions for the devices 1s and 1r at different times, as long as the sending and receiving time periods overlap sufficiently to receive the Tx data packet.

The predefined sending and receiving periods are selected experimentally depending on the inertia of the reaction of the photoelectric sensor 3 to lighting.

Correct or incorrect termination of the data sending and receiving session may be signaled by the devices 1s and 1r by sound, light, vibration and/or a message on the screen.

In other embodiments of the invention, the portable device 1 according to the invention may cooperate with a stationary device. In such a case, the covering of the photoelectric sensor 3 and the appropriate orientation of the reference vector will signal the readiness to send or receive data to/from the stationary device. Such functionality can be used, for example, to control a lock that unlocks the entrance to the building by means of a card 2.

In other embodiments of the invention, the microcontroller 5 may be integrated with the radio transceiver 6 and/or the memory circuit 9 and/or the spatial orientation sensor 4. In other embodiments of the invention, the radio transceiver 6 may be configured by the microcontroller 5 for periodic long-range transmission, for example, to transfer data to an external server.

A skilled technician can obviously use the scope of the disclosure of the invention to its fullest extent. Therefore, the above embodiments of the invention should be considered merely exemplary and not in any way limiting the scope of its protection as defined in the patent claims.

### List or reference numerals

- 1.: portable electronic device for storage and data transmission
- 2.: card
- 3.: photoelectric sensor
- 4.: spatial orientation sensor (accelerometer)
- 5.: microcontroller
- 6.: radio transceiver
- 7.: reference surface
- 8.: power source
- 9.: memory circuit

## Claims

1. A method of short-range data transmission between a portable electronic device (1) for storage and short-range data transmission, comprising a power source (8), a microcontroller (5), a memory circuit (9), and a radio transceiver (6), and another device of this type or a stationary device, **characterized in that** the portable electronic device (1) comprises
a photoelectric sensor (3) exposed to ambient light through a reference surface (7) of the device (1), and
a spatial orientation sensor (4) defining the reference vector (N) of the device (1), wherein the method comprises the steps of
(a) measuring the intensity of the light incident on the reference surface (7);
(b) awakening the microcontroller (5) if the light intensity measured in step (a) is lower than a predefined threshold (P) and determining the reference vector direction (N);
(c) turning on the radio transceiver (6) if the reference vector (N) is inclined relative to the gradient vector of the gravitational field by an angle within a predefined range of inclination angles, and preferably substantially parallel to the gradient vector of the gravitational field; and
(d) starting a data sending session from the memory circuit (9s) if the reference vector (N_{S}) is pointing within a predefined range of first directions, or starting a data receiving session to the memory circuit (9r) if the reference vector (N_{R}) is pointing within a predefined range of second directions, wherein said range of second directions is different, and preferably substantially opposite, to said range of first directions.

2. The method according to claim 1, **characterized in that** the microcontroller (5) enters the sleep mode after the end of the data sending or receiving session and in the case when the reference vector (N) is not substantially parallel to the gradient vector of the gravitational field.

3. The method according to claim 1 or 2, **characterized in that** during the data transmission session, the sensitivity and power of the radio transceiver (6) is minimized.

4. The method according to claim 1 or 2 or 3, **characterized in that** it comprises an additional step of (e) an audible and/or light and/or vibrational and/or image signaling of correct or incorrect termination of the data sending and/or receiving session.

5. The method according to claim 1 or 2 or 3 or 4, **characterized in that** step (a) is conducted at predefined time intervals.

6. The method according to any one of the claims 1 to 5, **characterized in that** the data sending session is conducted in step (d) for a predefined sending period and the data receiving session is conducted in step (d) for a predefined receiving period or until the data is received, whichever comes first.

7. The method according to any one of the claims 1 to 5, **characterized in that** the data sending and receiving sessions are conducted in step (d) until the transmission of the data is complete.

8. The method according to any one of the claims 1 to 7, **characterized in that** step (d) comprises a handshake process to determine the parameters of the data transmission session.

9. The method according to any one of the claims 1 to 8, **characterized in that** only one or only two portable electronic devices (1) are involved in the data transmission.

10. A portable electronic device (1) for storage and short-range data transmission, comprising a power source (8), a microcontroller (5), a memory circuit (9), and a radio transceiver (6), **characterized in that** it comprises
a photoelectric sensor (3) irradiated by a reference surface (7) of the device (1), and
a spatial orientation sensor (4) defining the reference vector (N) of the device (1),
and is configured such that
when the light intensity measured by said photoelectric sensor (3) is higher than a predefined threshold value (P) the microcontroller (5) is configured to operate in a sleep mode in which the photoelectric sensor (3) is active and the spatial orientation sensor (4) and the radio transceiver (6) are turned off,
when the light intensity measured by said photoelectric sensor (3) is lower than the predefined threshold value (P) the microcontroller (5) is awakened and the spatial orientation sensor (4) is turned on, wherein,
if the reference vector (N) is inclined relative to the gradient vector of the gravitational field by an angle within a predefined range of inclination angles, and preferably substantially parallel to the gradient vector of the gravitational field, the radio transceiver (6) is turned on, wherein
if the reference vector (N_{S}) is pointing within a predefined range of first directions, a data sending session from the memory circuit (9s) is initiated, and if the reference vector (N_{R}) is pointing within a predefined range of second directions, a data receiving session to the memory circuit (9r) is initiated, wherein
said range of second directions is different, and preferably substantially opposite, to said range of first directions.

11. The electronic device according to claim 10, **characterized in that**, after the termination of the data sending or receiving session and when the reference vector (N) is not substantially parallel to the gradient vector of the gravitational field, the microcontroller (5) is configured to enter a sleep mode.

12. The electronic device according to claim 10 or 11, **characterized in that**, it is in the form of a card (2), preferably similar to standard ISO/IEC 7810, wherein said reference surface (7) is parallel to the front surface of the card (2).

13. The electronic device according to claim 10 or 11 or 12, **characterized in that**, it comprises at least one additional component such as a light source, sound source, vibration alert, screen, keyboard and/or a biometric sensor to identify the authorized user.

14. The electronic device according to claim 10 or 11 or 12 or 13, **characterized in that**, the radio transceiver (6) and/or the photoelectric sensor (3) and/or the spatial orientation sensor (4) and/or the memory circuit (9) is/are integrated with the microcontroller (5).

15. The electronic device according to claim 10 or 11 or 12 or 13 or 14 **characterized in that**, said spatial orientation sensor (4) has the form of an accelerometer, preferably a uniaxial accelerometer configured to determine its orientation with respect to a gravitational field which axis defines the reference vector (N).

## Patentansprüche

1. Ein Verfahren zur Kurzstrecken-Datenübertragung zwischen einer tragbaren elektronischen Vorrichtung (1) zur Speicherung und Kurzstrecken-Datenübertragung, die eine Stromquelle (8), einen Mikrocontroller (5), eine Speicherschaltung (9) und einen Funksendeempfänger (6) umfasst, und einer anderen Vorrichtung dieser Art oder einer stationären Vorrichtung, **dadurch gekennzeichnet, dass** die tragbare elektronische Vorrichtung (1) aus Folgendem besteht
einem photoelektrischen Sensor (3), der über eine Referenzfläche (7) der Vorrichtung (1) dem Umgebungslicht ausgesetzt ist, und
einem Raumorientierungssensor (4), der den Referenzvektor (N) der Vorrichtung (1) definiert, wobei das Verfahren aus folgenden Schritten besteht:
(a) Messung der Intensität des auf die Referenzfläche (7) einfallenden Lichts;
(b) Aufwecken des Mikrocontrollers (5), wenn die in Schritt (a) gemessene Lichtintensität niedriger als ein vordefinierter Schwellenwert (P) ist, und Bestimmen der Richtung des Referenzvektors (N);
(c) Einschalten des Funksendeempfängers (6), wenn der Referenzvektor (N) relativ zum Gradientenvektor des Gravitationsfeldes um einen Winkel innerhalb eines vordefinierten Bereichs von Neigungswinkeln und vorzugsweise im Wesentlichen parallel zum Gradientenvektor des Gravitationsfeldes geneigt ist; und
(d) Starten einer Datensendesitzung von der Speicherschaltung (9s), wenn der Referenzvektor (N_{S}) innerhalb eines vordefinierten Bereichs von ersten Richtungen zeigt, oder Starten einer Datenempfangssitzung zu der Speicherschaltung (9r), wenn der Referenzvektor (N_{R}) innerhalb eines vordefinierten Bereichs von zweiten Richtungen zeigt, wobei der Bereich der zweiten Richtungen sich von dem Bereich der ersten Richtungen unterscheidet und vorzugsweise im Wesentlichen entgegengesetzt dazu ist.

2. Das Verfahren nach Anspruch 1, **dadurch gekennzeichnet, dass** der Mikrocontroller (5) nach dem Ende der Datensende- oder Empfangssitzung und in dem Fall, in dem der Referenzvektor (N) nicht im Wesentlichen parallel zum Gradientenvektor des Gravitationsfeldes ist, in den Schlafmodus übergeht.

3. Das Verfahren nach Anspruch 1 oder 2, **dadurch gekennzeichnet, dass** während der Datenübertragungssitzung die Empfindlichkeit und die Leistung des Funksendeempfängers (6) minimiert wird.

4. Das Verfahren nach Anspruch 1 oder 2 oder 3, **dadurch gekennzeichnet, dass** es einen zusätzlichen Schritt umfasst: (e) eine akustische und/oder Licht- und/oder Vibrationsund/oder Bildsignalisierung der korrekten oder inkorrekten Beendigung der Datensende- und/oder Empfangssitzung.

5. Das Verfahren nach Anspruch 1 oder 2 oder 3 oder 4, **dadurch gekennzeichnet, dass** Schritt (a) in vordefinierten Zeitintervallen durchgeführt wird.

6. Das Verfahren nach einem der Ansprüche 1 bis 5, **dadurch gekennzeichnet, dass** die Datensendesitzung in Schritt (d) für eine vordefinierte Sendeperiode durchgeführt wird und die Datenempfangssitzung in Schritt (d) für eine vordefinierte Empfangsperiode oder bis zum Empfang der Daten durchgeführt wird, je nachdem, was zuerst eintritt.

7. Das Verfahren nach einem der Ansprüche 1 bis 5, **dadurch gekennzeichnet, dass** die Datensende- und -empfangssitzungen in Schritt (d) durchgeführt werden, bis die Datenübertragung abgeschlossen ist.

8. Das Verfahren nach einem der Ansprüche 1 bis 7, **dadurch gekennzeichnet, dass** Schritt (d) einen Handshake-Prozess zur Bestimmung der Parameter der Datenübertragungssitzung umfasst.

9. Das Verfahren nach einem der Ansprüche 1 bis 8, **dadurch gekennzeichnet, dass** nur ein oder nur zwei tragbare elektronische Vorrichtungen (1) an der Datenübertragung beteiligt sind.

10. Eine tragbare elektronische Vorrichtung (1) zur Speicherung und Kurzstrecken-Datenübertragung, das eine Stromquelle (8), einen Mikrocontroller (5), eine Speicherschaltung (9) und einen Funksendeempfänger (6) umfasst, **dadurch gekennzeichnet, dass** es aus Folgendem besteht
einem photoelektrischen Sensor (3), der von einer Referenzfläche (7) der Vorrichtung (1) bestrahlt wird, und
einem Raumorientierungssensor (4), der den Referenzvektor (N) der Vorrichtung (1) definiert,
und so konfiguriert ist, dass
wenn die von dem photoelektrischen Sensor (3) gemessene Lichtintensität höher als ein vordefinierter Schwellenwert (P) ist, der Mikrocontroller (5) so konfiguriert ist, dass er in einem Schlafmodus, in dem der photoelektrische Sensor (3) aktiv ist und der Raumorientierungssensor (4) und der Funksendeempfänger (6) ausgeschaltet sind, wenn die von dem photoelektrischen Sensor (3) gemessene Lichtintensität niedriger ist als der vordefinierte Schwellenwert (P), wird der Mikrocontroller (5) aufgeweckt und der Raumorientierungssensor (4) eingeschaltet, wobei,
wenn der Referenzvektor (N) relativ zum Gradientenvektor des Gravitationsfeldes um einen Winkel innerhalb eines vordefinierten Bereichs von Neigungswinkeln und vorzugsweise im Wesentlichen parallel zum Gradientenvektor des Gravitationsfeldes geneigt ist, wird der Funksendeempfänger (6) eingeschaltet, wobei
wenn der Referenzvektor (N_{S}) innerhalb eines vordefinierten Bereichs von ersten Richtungen zeigt, wird eine Datensendesitzung von der Speicherschaltung (9s) eingeleitet, und
wenn der Referenzvektor (N_{R}) innerhalb eines vordefinierten Bereichs von zweiten Richtungen zeigt, eine Datenempfangssitzung zu der Speicherschaltung (9r) eingeleitet wird, wobei
der Bereich der zweiten Richtungen sich von dem Bereich der ersten Richtungen unterscheidet und vorzugsweise im Wesentlichen entgegengesetzt zu diesem ist.

11. Die elektronische Vorrichtung nach Anspruch 10, **dadurch gekennzeichnet, dass** der Mikrocontroller (5) so konfiguriert ist, dass er nach Beendigung der Datensende- oder - empfangssitzung und wenn der Referenzvektor (N) nicht im Wesentlichen parallel zum Gradientenvektor des Gravitationsfeldes ist, in einen Schlafmodus übergeht.

12. Die elektronische Vorrichtung nach Anspruch 10 oder 11, **dadurch gekennzeichnet, dass** sie die Form einer Karte (2) hat, vorzugsweise ähnlich der Norm ISO/IEC 7810, wobei die Referenzfläche (7) parallel zur Vorderseite der Karte (2) ist.

13. Die elektronische Vorrichtung nach Anspruch 10 oder 11 oder 12, **dadurch gekennzeichnet, dass** sie mindestens eine zusätzliche Komponente wie eine Lichtquelle, eine Tonquelle, einen Vibrationsalarm, einen Bildschirm, eine Tastatur und/oder einen biometrischen Sensor zur Identifizierung des autorisierten Benutzers umfasst.

14. Die elektronische Vorrichtung nach Anspruch 10 oder 11 oder 12 oder 13, **dadurch gekennzeichnet, dass** der Funksendeempfänger (6) und/oder der photoelektrische Sensor (3) und/oder der Raumorientierungssensor (4) und/oder die Speicherschaltung (9) in den Mikrocontroller (5) integriert ist/sind.

15. Die elektronische Vorrichtung nach Anspruch 10 oder 11 oder 12 oder 13 oder 14, **dadurch gekennzeichnet, dass** der Raumorientierungssensor (4) die Form eines Beschleunigungsmessers hat, vorzugsweise eines einachsigen Beschleunigungsmessers, der so konfiguriert ist, dass er seine Orientierung in Bezug auf ein Gravitationsfeld bestimmt, dessen Achse den Referenzvektor (N) definiert.

## Revendications

1. Un procédé de transmission de données à courte distance entre un dispositif électronique portable (1) pour le stockage et la transmission de données à courte distance, comprenant une source d'énergie (8), un microcontrôleur (5), un circuit de mémoire (9) et un émetteur-récepteur radio (6), et un autre dispositif de ce type ou un dispositif stationnaire, **caractérisé en ce que** le dispositif électronique portable (1) comprend
un capteur photoélectrique (3) exposé à la lumière ambiante à travers une surface de référence (7) du dispositif (1), et
un capteur d'orientation spatiale (4) définissant le vecteur de référence (N) du dispositif (1), dans lequel le procédé comprend les étapes de
(a) mesure de l'intensité de la lumière incidente sur la surface de référence (7);
(b) réveil du microcontrôleur (5) si l'intensité lumineuse mesurée à l'étape (a) est inférieure à un seuil prédéfini (P) et détermination de la direction du vecteur de référence (N);
(c) activation de l'émetteur-récepteur radio (6), si le vecteur de référence (N) est incliné par rapport au vecteur de gradient du champ gravitationnel d'un angle compris dans une plage d'angles d'inclinaison prédéfinie, et de préférence sensiblement parallèle au vecteur de gradient du champ gravitationnel; et
(d) démarrage d'une session d'envoi de données à partir du circuit de mémoire (9s), si le vecteur de référence (N_{S}) pointe dans une plage prédéfinie de premières directions, ou démarrage d'une session de réception de données vers le circuit de mémoire (9r), si le vecteur de référence (N_{R}) pointe dans une plage prédéfinie de secondes directions, dans laquelle ladite plage de secondes directions est différente, et de préférence sensiblement opposée, à ladite plage de premières directions.

2. Le procédé selon la revendication 1, **caractérisé en ce que** le microcontrôleur (5) entre en mode veille après la fin de la session d'envoi ou de réception de données et dans le cas où le vecteur de référence (N) n'est pas sensiblement parallèle au vecteur de gradient du champ gravitationnel.

3. Le procédé selon la revendication 1 ou 2, **caractérisé en ce que** pendant la session de transmission de données, la sensibilité et la puissance de l'émetteur-récepteur radio (6) sont réduites au minimum.

4. Le procédé selon la revendication 1, 2 ou 3, **caractérisé en ce qu'**il comprend une étape supplémentaire (e) de signalisation sonore et/ou lumineuse et/ou vibratoire et/ou visuelle de la fin correcte ou incorrecte de la session d'envoi et/ou de réception de données.

5. Le procédé selon la revendication 1, 2, 3 ou 4, **caractérisé en ce que** l'étape (a) se déroule à des intervalles de temps prédéfinis.

6. Le procédé selon l'une des revendications 1 à 5, **caractérisé en ce que** la session d'envoi de données se déroule à l'étape (d) pendant une période d'envoi prédéfinie et que la session de réception de données se déroule à l'étape (d) pendant une période de réception prédéfinie ou jusqu'à ce que les données soient reçues, selon ce qui se produit en premier.

7. Le procédé selon l'une des revendications 1 à 5, **caractérisé en ce que** les sessions d'envoi et de réception de données se déroulent à l'étape (d) jusqu'à ce que la transmission des données soit terminée.

8. Le procédé selon l'une des revendications 1 à 7, **caractérisé en ce que** l'étape (d) comprend un processus d'établissement de liaison pour déterminer les paramètres de la session de transmission de données.

9. Le procédé selon l'une des revendications 1 à 8, **caractérisé en ce qu'**un seul ou deux dispositifs électroniques portables (1) participent à la transmission des données.

10. Un dispositif électronique portable (1) pour le stockage et la transmission de données à courte distance, comprenant une source d'énergie (8), un microcontrôleur (5), un circuit de mémoire (9), et un émetteur-récepteur radio (6), **caractérisé en ce qu'**il comprend
un capteur photoélectrique (3) irradié par une surface de référence (7) du dispositif (1), et
un capteur d'orientation spatiale (4) définissant le vecteur de référence (N) du dispositif (1),
et qu'il est configuré de telle sorte que
lorsque l'intensité lumineuse mesurée par ledit capteur photoélectrique (3) est supérieure à une valeur seuil prédéfinie (P), le microcontrôleur (5) est configuré pour fonctionner en mode veille dans lequel le capteur photoélectrique (3) est actif et le capteur d'orientation spatiale (4) et l'émetteur-récepteur radio (6) sont éteints,
lorsque l'intensité lumineuse mesurée par ledit capteur photoélectrique (3) est inférieure à la valeur seuil prédéfinie (P), le microcontrôleur (5) est réveillé et le capteur d'orientation spatiale (4) est mis en marche, dans lequel
si le vecteur de référence (N) est incliné par rapport au vecteur de gradient du champ gravitationnel d'un angle compris dans une plage d'angles d'inclinaison prédéfinie, et de préférence sensiblement parallèle au vecteur de gradient du champ gravitationnel, l'émetteur-récepteur radio (6) est mis en marche, dans lequel
si le vecteur de référence (N_{S}) pointe dans une plage prédéfinie de premières directions, une session d'envoi de données depuis le circuit de mémoire (9s) est lancée, et
si le vecteur de référence (N_{R}) pointe dans une plage prédéfinie de secondes directions, une session de réception de données vers le circuit de mémoire (9r) est lancée, dans laquelle ladite plage de secondes directions est différente, et de préférence sensiblement opposée, à ladite plage de premières directions.

11. Le dispositif électronique selon la revendication 10, **caractérisé en ce que**, après la fin de la session d'envoi ou de réception de données et lorsque le vecteur de référence (N) n'est pas sensiblement parallèle au vecteur de gradient du champ gravitationnel, le microcontrôleur (5) est configuré pour entrer en mode veille.

12. Le dispositif électronique selon la revendication 10 ou 11, **caractérisé en ce qu'**il se présente sous la forme d'une carte (2), de préférence similaire à la norme ISO/CEI 7810, dans laquelle ladite surface de référence (7) est parallèle à la surface avant de la carte (2).

13. Le dispositif électronique selon la revendication 10, 11 ou 12, **caractérisé en ce qu'**il comprend au moins un composant supplémentaire tel qu'une source lumineuse, une source sonore, une alerte vibratoire, un écran, un clavier et/ou un capteur biométrique permettant d'identifier l'utilisateur autorisé.

14. Le dispositif électronique selon la revendication 10 ou 11 ou 12 ou 13, **caractérisé en ce que** l'émetteur-récepteur radio (6) et/ou le capteur photoélectrique (3) et/ou le capteur d'orientation spatiale (4) et/ou le circuit de mémoire (9) est/sont intégré(s) au microcontrôleur (5).

15. Le dispositif électronique selon la revendication 10 ou 11 ou 12 ou 13 ou 14 **caractérisé en ce que** ledit capteur d'orientation spatiale (4) a la forme d'un accéléromètre, de préférence un accéléromètre uniaxial configuré pour déterminer son orientation par rapport à un champ gravitationnel dont l'axe définit le vecteur de référence (N).
